# FASCICULE DE BREVET EUROPEEN

(11) **EP 2 915 155 B1**
(45) Date de publication et mention de la délivrance du brevet: **03.04.2019**
(21) Numéro de dépôt: 13783972.6
(22) Date de dépôt: 04.10.2013
(51) Int. Cl.: G09B 9/042, G09B 9/058, G09B 19/16

(54) **SIMULATEUR REEL DE PILOTAGE DE MOTOCYCLETTE**
ECHTER MOTORRADFAHRSIMULATOR
REAL MOTORBIKE-RIDING SIMULATOR

(30) Priorité: 26.10.2012 FR 1202864
(43) Date de publication de la demande: 09.09.2015
(73) Titulaire: DERICQUEBOURG, Guy Francois Joseph, 62690 Bethonsart (FR)
(72) Inventeur: DERICQUEBOURG, Guy Francois Joseph, 62690 Bethonsart (FR)
(86) Numéro de dépôt international: PCT/FR2013/000260
(87) Numéro de publication internationale: WO 2014/064344

(56) Documents cités:
- WO-A1-2005/091250
- WO-A2-01/89645
- WO-A2-2010/045627
- US-A- 4 978 300
- US-A1- 2005 175 968
- US-A1- 2009 075 741

## Description

La présente invention concerne un dispositif de simulation de pilotage d'un véhicule à 2 roues restituant les vraies sensations de conduite en utilisant un véhicule réel. Ce dispositif permet l'apprentissage et l'amélioration du pilotage de motocyclette de tous types et de toutes puissances pouvant également s'adapter aux scooters et autres véhicules du même genre. Il permet aux conducteurs de dépasser en toute sécurité leurs limites habituelles dans l'amélioration des performances individuelles et sportives. En effet ce dispositif supprime les risques de la conduite tout en laissant ressentir le comportement du véhicule comme si il circulait sur un circuit routier réel. Les erreurs de pilotage sont sans conséquences ce qui permet un apprentissage sans danger.

Les dispositifs existants permettent de simuler le déplacement d'un 2 roue sur un parcours visualisé sur un écran mais le pilotage n'est pas réaliste car ces équipements ne restituent pas le comportement réel de ce type de véhicule. Lors de l'utilisation d'un simulateur actuel, on ne ressent pas les phénomènes d'accélération et de freinage ni l'effet du vent ou la réduction d'adhérence sur sol humide car les roues sont absentes de ces simulateurs, la masse et les mouvements de l'appareil sur lequel le conducteur s'assoit ne sont pas représentatifs d'un véhicule réel, la résistance à l'inclinaison n'existe pas. En effet, il n'y a pas d'effet gyroscopique puisqu'il n'y a pas de masses tournantes. De plus les situations exceptionnelles tel que le glissement des roues en virage ne peuvent pas exister car la maquette n'a pas assez de degrés de liberté sur son support ainsi le conducteur ne peut pas utiliser ces simulateurs pour l'apprentissage mais uniquement pour l'amusement et sans pouvoir ressentir le plaisir d'utilisation réelle d'une motocyclette. Un dispositif Américain appelé TERESI (WO 01/89645 A2) utilise une vraie moto pour simuler une course de dragster en ligne droite uniquement mais la moto est maintenu de façon semi-rigide et ne peut s'incliner pour simuler un roulage classique sur une route ou sur une piste ayant des courbes.
Les simulateurs de Wheeling qui existent ne permettent pas non plus de simuler un roulage normal avec des courbes, leur but étant le Wheeling. Un system de ce type appelé GRAY (WO 2010/045627 A2) aux USA fixe la moto au niveau de la roue avant pour la guider dans son mouvement de Wheeling et permet en dehors de cette application de Wheeling d'incliner légèrement la moto (comme l'indique la description du système en question) mais cela ne constitue pas une fonction suffisante pour fournir les vraies sensations de roulage car une moto doit pouvoir s'incliner fortement en virage et en plus le dispositif appelé GRAY ne simule pas les effets de la force centrifuge permettant de relever la moto en sortie de virage.

Le dispositif selon l'invention permet de remédier à ces inconvénients en restituant le comportement réel d'un véhicule ce qui permet l'apprentissage et l'amélioration des performances de pilotage en toute sécurité. Ces conditions de sécurité que procure le dispositif par rapport à la conduite en extérieure constitues une avancée importante car cela peut permettre de réduire le taux d'accident individuel dû aux erreurs de pilotage des conducteurs.

Selon une première caractéristique le dispositif tel que décrit en revendication l_comporte un véhicule réel évoluant sur 2 tapis roulants distincts, l'un pour la roue avant et l'autre pour la roue arrière. Le tapis arrière est entraîné par la roue arrière du véhicule et la roue avant du véhicule est entrainée à la même vitesse de rotation par le tapis avant. Ce dernier ayant en plus la capacité de suivre les mouvements de la direction de la fourche du véhicule. Ceci permet de reproduire en intérieur le comportement réel qu'aurait le véhicule sur un parcours extérieur en situation normale de conduite mais également en situation exceptionnelle. En effet le dispositif de la présente invention donne une liberté de mouvement au véhicule qui est engendrée grâce à l'orientation de la fourche. Cette capacité indispensable autorise le pilote à utiliser le contre-braquage pour pouvoir incliner la moto exactement comme sur la route ou sur la piste grâce aux effets gyroscopiques générés par la vitesse de rotation des roues avant et arrières et l'orientation de la fourche.

Selon une deuxième caractéristique, les tapis roulants du dispositif permettent de répondre aux exigences de vitesse actuelles des véhicules à 2 roues circulant sur route et sur circuit, ils permettent également de mesurer en temps réel la pression verticale exercée par chaque roue sur les tapis pendant le roulage.

Selon une troisième caractéristique, la distance entre les tapis roulants avant et arrières et réglable afin d'adapter le dispositif à l'empattement des différents véhicules utilisables, de même les tapis roulants peuvent être échangés facilement afin de modifier les conditions d'adhérence des roues pour permettre la reproduction des différentes conditions de circulation liées aux intempéries.

Selon une quatrième caractéristique, le véhicule est maintenu sur le dispositif par un support rigide attaché au niveau du châssis du véhicule. Ainsi ce dernier garde sa position sur les tapis pendant le roulage. Ce support est doté de plusieurs degrés de liberté afin tout d'abord d'autoriser les inclinaisons latérales du véhicule nécessaires à la conduite en courbe jusqu'à une inclinaison maximale par rapport à la verticale. Cette limite est prédéterminée et fixe mais peut être changée si nécessaire, elle garantit l'impossibilité de chute latérale du véhicule. Cette capacité d'inclinaison latérale du dispositif est contrôlée par un vérin pour reproduire la descente sur l'angle en fonction de l'augmentation de la force centrifuge ainsi simulée, cette simulation de force centrifuge est utilisée également en sortie de virage pour ramener la moto en position verticale en fonction de l'accélération produite par le pilote grâce à la poignée de gaz.

Selon une cinquième caractéristique, l'inclinaison du véhicule peut être facilement contrainte à des valeurs inférieures à la limite maximum. A titre d'exemple non limitatif pour permettre d'imposer un mode de conduite contraint en amplitude d'inclinaison.

Selon une sixième caractéristique, un second degré de liberté du support permet la restitution des comportements exceptionnels du véhicule, à titre d'exemple non limitatif le support autorise la glissade des roues en courbe par perte d'adhérence. Cette fonction de simulation de glissade par perte d'adhérence est engendrée par des vérins auxiliaires qui font dévier le véhicule de sa trajectoire en fonction du calcul en temps réel de son adhérence (valeur due à l'inclinaison, l'accélération imposée par le pilote et le coefficient d'adhérence des pneus). Le support limite l'amplitude de tous les mouvements du véhicule afin d'éviter la chute du véhicule et de son conducteur.

Selon une septième caractéristique, le dispositif peut limiter le comportement du véhicule à un mode nominal de conduite en interdisant les mouvements exceptionnels. Dans ce cas l'amplitude des mouvements du véhicule est atténuée afin que le pilote ne subisse pas les conséquences d'erreurs de conduite qui en situation réelle extérieure seraient sanctionnées par une chute. A titre d'exemple non limitatif ce mode peut être utilisé dans une phase d'apprentissage simplifié de la maîtrise du véhicule en début de formation à la conduite.

Selon une huitième caractéristique, le dispositif comporte des moyens de visualisation de parcours routiers ou tout-terrains dont la taille et la répartition permet de stimuler le regard du conducteur et sur lequel la représentation du parcours est asservie en temps réel à la trajectoire du véhicule quel que soit le paramétrage choisie pour la simulation et le mode de visualisation. L'affichage de la trajectoire idéale pouvant également être visualisé pendant la simulation

Selon une neuvième caractéristique, le dispositif comporte un plastron qui sera porté par le conducteur du véhicule afin de restituer au conducteur les sensations d'accélération et de freinage du véhicule. Cette fonction est un complément apportant au dispositif de la présente invention décrit dans la revendication 1, c'est effectivement une composante importante de la restitution des vraies sensations de pilotage moto. Le conducteur ressent ainsi les effets directs de ses actions sur les commandes du véhicule.

Selon une dixième caractéristique, le dispositif comporte des moyens de simulation de vent latéral, frontal et arrière afin de restituer au plus près les conditions extérieures de conduite.

Selon une onzième caractéristique, Le dispositif comporte des éléments de sécurité à déclenchement automatique, mais également commandables à partir d'un pupitre de commande, afin de garantir la sauvegarde du conducteur et des éléments environnants en cas de situation d'urgence. Ces éléments permettent de stopper le moteur du véhicule et la rotation des éléments tournants du dispositif et du véhicule. De plus le plastron mentionné dans la neuvième caractéristique permet d'éviter au conducteur d'être éjecté en cas de mouvement intempestif du véhicule.

Selon des modes particuliers de réalisation le dispositif peut autoriser l'interchangeabilité du véhicule pour répondre aux différents besoins des utilisateurs. Dès que le véhicule est installé sur le dispositif, ce dernier peut être conduit comme il le serait sur un parcours extérieur mais sans engendrer de déplacement absolu dans l'espace grâce aux 2 tapis roulants situés sous les roues et au support central qui maintient le véhicule de façon semi-rigide.

L'amplitude d'inclinaison peut être contrainte pour assurer certaines restrictions de conduite. Les mouvements naturels et exceptionnels du véhicule utilisé sont possibles mais ils peuvent être limités pour qu'aucune chute ne soit possible. Pour permettre tous ces types de mouvement du véhicule, le support central peut être attaché au corps central du dispositif par des vérins qui lui confèrent une capacité de mouvement dans les 3 dimensions.

Des écrans de visualisation peuvent permettre de présenter au conducteur un parcours asservi à la trajectoire suivie par le véhicule. Ce parcours peut être virtuel ou réel, tout-terrain ou routier (circuit ouvert ou fermé) en fonction des simulations choisies. Le conducteur peut être soumis aux efforts d'accélération et de freinage qu'il génère lui-même avec le véhicule et il pourra être soumis à l'action de l'air liée à la vitesse et à un vent additionnel et ceci sous différentes conditions d'adhérence correspondant aux conditions extérieurs possibles.

Le dispositif peut être commandé par un pupitre de commande qui peut permettre les fonctions de mise en route du dispositif avec contrôle de bon fonctionnement initial, de démarrage d'une séquence de simulation, d'imposition d'une séquence de simulation restreinte et d'arrêt du dispositif. Ce pupitre peut contrôler en temps réel le bon déroulement de tous les événements afin de pouvoir stopper automatiquement la séquence de simulation en cas de situation d'urgence: arrêt du moteur et des pièces tournantes imposé. Cet arrêt peut également être provoqué manuellement à partir du pupitre de commande par la personne qui gère le dispositif pendant la simulation.

Les dessins annexés illustrent l'invention :
La figure 1 représente en vue de côté la version de base du dispositif de l'invention sans les planchés (1) et (2).
La figure 2 représente une vue de dessus partielle, sans véhicule, d'une variante du dispositif de l'invention avec 2 tapis roulants latéraux.

En référence à ces dessins, le dispositif comporte un plancher fixe (1) permettant l'accès facile au véhicule et couvrant la structure du dispositif. Un planché (2) solidaire de la partie (3c) du support de véhicule complète le plancher fixe (1). L'accès au véhicule se fait via la rampe (24).

Les 2 tapis roulants (4) et (5) supportant le véhicule sont fixés sur un châssis principal (6) qui est également le point d'attache des vérins auxiliaires (7) pilotables en position, ces derniers fixant la partie (3c) du support du véhicule de façon semi-rigide.

Le support du véhicule comporte trois parties notées (3a), (3b) et (3c) afin de permettre l'interchangeabilité du système de fixation du véhicule (3a), car le mode de fixation du véhicule est différent selon les types de véhicule utilisés.

Les éléments (3a) et (3b) sont limités dans leur mouvement d'inclinaison latérale par un vérin (8) afin de permettre les restrictions de mouvement lors des simulations contraintes. La limite absolue d'inclinaison du véhicule est limitée par la conception de la partie (3c) du support en utilisant un axe (9) inséré dans la pièce (3b) et venant en appuis sur la pièce (3c).

Le tapis roulant (5) situé sous la roue avant est orientable et asservi en position sur la direction prise par le guidon du véhicule, cet asservissement utilise un capteur d'angle pour mesurer en temps réel la position de la fourche. La vitesse de rotation de ce tapis (5) est asservie à la vitesse du véhicule grâce à un moteur électrique et au capteur de vitesse installé sur le tapis arrière (4). Le réglage en tension des 2 tapis roulants (4) et (5) est réalisé à l'aide d'une glissière mécanique et d'un système vis-écrou.

La visualisation (10) permet de stimuler tout le champ de vision du conducteur. Le plastron (11) du conducteur utilise des filins avant et arrières (12) et (13) pour générer les sensations d'accélération et de freinage et assurer la sécurité du conducteur en cas de mouvements intempestifs du véhicule grâce à l'utilisation d'un moyen de blocage instantané. 2 filins (12) partent de la face postérieure du plastron (11) pour rejoindre leur boitier de contrôle (14) et 2 filins (13) partent de la face antérieure du plastron, passent par la colonne de direction du véhicule et reviennent vers l'arrière du véhicule dans le boitier de contrôle (14) de la fonction.

L'effet du mouvement de l'air et du vent est mis en oeuvre par des ventilateurs régulés (15) positionnés autour du dispositif et fixés sur le châssis principal (6). La vitesse des ventilateurs (15) est calculée à partir de la vitesse du véhicule et en fonction des conditions de simulation. Les différentes conditions d'adhérence peuvent être réalisées grâce au moyen de tension des tapis roulants (4) et (5) puisqu'il permet le changement rapide des tapis.

Les éléments de sécurité sont réalisés de la manière suivante:
Un actionneur (16) agissant sur l'arrêt d'urgence du véhicule ce qui permet de stopper le moteur en cas de situation dangereuse. Cet actionneur peut être enclenché par l'arrêt d'urgence (17) du pupitre de commande (18) ou automatiquement si le système de contrôle du dispositif détecte des conditions anormales de fonctionnement. La roue arrière est freinée par un actionneur (19) agissant sur le frein du véhicule. Les tapis roulants (4) et (5) sont stoppés : Par l'arrêt du moteur d'entraînement pour le tapis avant (5) et par un freinage des rouleaux supports du tapis arrière (4). Le véhicule est automatiquement ramené en position verticale et le plastron (11) du pilote est retenu en position de la même manière qu'une ceinture de sécurité retient un conducteur de voiture.

Le pupitre de commande (18) est constitué par un ordinateur équipé d'un écran et de cartes d'entrées-sorties permettant d'acquérir les mesures en provenance des capteurs du dispositif, d'effectuer les calculs indispensables au fonctionnement et de commander les actionneurs et organes de contrôle. L'écran du pupitre (18) permet de gérer le dispositif dans toutes les phases de fonctionnement. Le bouton poussoir spécifique (17) assure la fonction d'arrêt d'urgence du dispositif et un contacteur à clé (20) permet de bloquer l'utilisation du dispositif aux personnes non autorisées. La liaison entre le pupitre de commande (18) et les éléments de contrôle-commande du dispositif peut être filaire ou radio selon la nécessité.

Un système de communication radio permet une liaison bidirectionnelle entre le conducteur du véhicule et un ou plusieurs interlocuteurs situés au niveau du pupitre de commande (18).

Un système d'évacuation des vapeurs d'échappement (21) est installé au droit des pots d'échappement du véhicule pour éviter la pollution du local.

Des protections antibruit (22) sont fixées autour du dispositif afin de respecter le confort acoustique des utilisateurs et de l'environnement direct. De même des éléments de sécurité (23) sont positionnés autour du dispositif pour assurer la protection des personnes circulant à proximité.

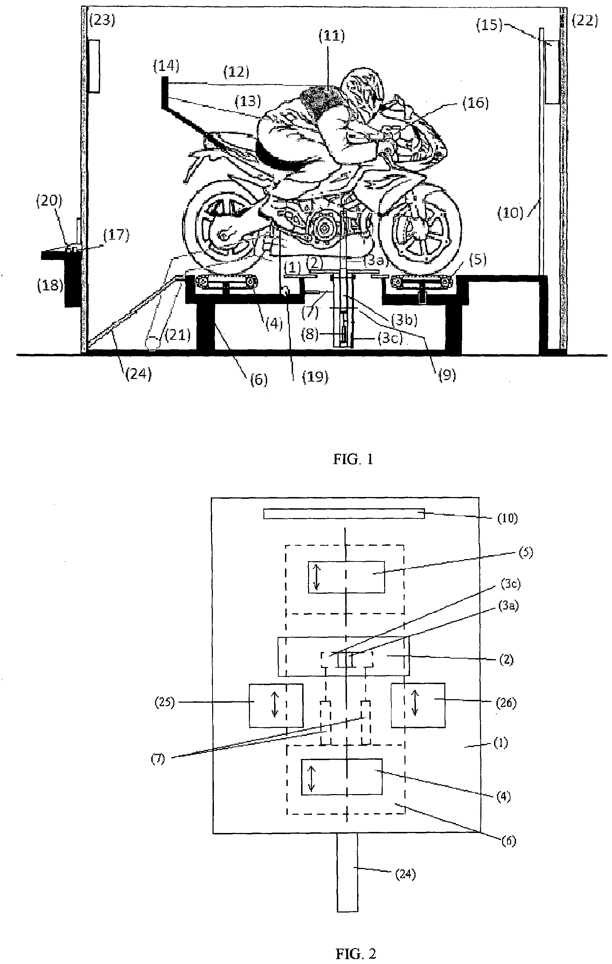

Selon une variante représentée en figure 2, des tapis roulants latéraux (25) et (26) synchronisés à la vitesse des tapis (4) et (5) peuvent être ajoutés pour simuler le mouvement du sol dans les zones d'appuis des genoux du pilote lors de la prise d'inclinaison pour les cas d'entraînement sportif. Ces tapis sont indispensables pour restituer les sensations de pilotage sur circuit car le genou du pilote constitue un 3ieme point d'appuis sur la piste (en plus des roues) et en même temps un repère d'inclinaison très important pour le pilote. De même la lubrification des tapis roulants (4) et (5) peut également être utilisée pour simuler les différentes conditions d'adhérence.

Le protocole de simulation peut permettre plusieurs variantes et choix d'utilisation selon les besoins exprimés par l'utilisateur, A titre d'exemple non limitatif:
- Conduite totalement libre de contraintes, le comportement du dispositif est uniquement contraint par les limites extrêmes prédéterminées et par les règles de sécurité.
- Conduite normale n'autorisant pas les comportements exceptionnels du véhicule, toutes les erreurs de conduites sont atténuées par le dispositif.
- Conduite d'apprentissage limitant certains paramètres choisis.
- Conduite sous une contrainte particulière anormale choisie.
- Répétition de séquences de parcours choisies.
- Suppression ou ajout de vent latéral, frontal ou arrière ou combinaison de plusieurs directions.
- Suppression ou ajout des sensations d'accélération et de freinage ou l'une quelconque des deux.
- Choix du mode de visualisation sur l'écran et choix de la simulation.
- Modification de la trajectoire idéale recherchée.
- Prédiction de la trajectoire suivie par le véhicule.

A titre d'exemple non limitatif, le dispositif aura des dimensions de l'ordre de 4 mètres de largeur, de 6 mètres de longueur et de 2.7 mètres de hauteur.

Le dispositif selon l'invention est particulièrement destiné à l'apprentissage et à l'amélioration du pilotage de véhicule à 2 roues. Grâce à sa capacité de restitution du comportement réel d'un véhicule dans les différentes configurations de roulage telles qu'elles peuvent exister en extérieur, il peut être utilisé par tous type de conducteur aussi bien à des fins ludiques, d'apprentissage, de perfectionnement ou d'entraînement professionnel intensif et ceci en toute sécurité. Les constructeurs et équipementiers peuvent également l'utiliser pour tester de nouveaux équipements en ayant la possibilité d'effectuer très simplement des mesures dynamiques en utilisation réelle ce qui n'est pas toujours facile et même parfois impossible en extérieur.

## Revendications

1. Dispositif de simulation de pilotage d'un véhicule à deux roues restituant les vraies sensations de conduite ledit dispositif utilisant un véhicule réel évoluant sur deux tapis roulants distincts (4) et (5), l'un pour la roue avant et l'autre pour la roue arrière, ledit dispositif étant **caractérisé en ce que** le tapis arrière est entraîné par la roue arrière du véhicule et la roue avant du véhicule est entraînée à la même vitesse de rotation par le tapis avant, ce dernier étant asservi à la direction de la fourche du véhicule, afin d'obtenir dans les virages, l'effet gyroscopique dû aux masses tournantes du véhicule (roues et vilebrequin); et **en ce que** les différents types de véhicule utilisables sont maintenus en position sur le dispositif par un support rigide adaptable (3a) attaché au châssis du véhicule, ledit support rigide adaptable (3a) comprenant un vérin (8) procurant les degrés de liberté nécessaires à la restitution des inclinaisons latérales et deux vérins (7) simulant des comportements exceptionnels de glissade latérales du véhicule lors de la perte d'adhérence des roues avant ou arrières.

2. Dispositif selon la revendication 1 **caractérisé en ce que** le tapis arrière (4) est entraîné par la roue arrière du véhicule dans le respect des conditions d'adhérence simulées, la roue avant du véhicule étant entraînée à la même vitesse de rotation par le tapis avant (5) en respectant la liberté d'orientation de la fourche avant dans une gamme de vitesse compatible avec les capacités des véhicules routiers et sportifs actuels.

3. Dispositif selon la revendication 1 ou la revendication 2 **caractérisé en ce que** la distance entre le tapis arrière (4) et le tapis avant (5) est réglable afin d'être compatible avec l'empattement des différents types de véhicule à 2 roues.

4. Dispositif selon l'une quelconque des revendications précédentes **caractérisé en ce que** les tapis roulants (4) et (5) permettent de mesurer en temps réel la pression verticale exercée par chaque roue sur les tapis pendant le roulage.

5. Dispositif selon la revendication 1 et la revendication 2 **caractérisé en ce que** 2 tapis latéraux (25) et (26) synchronisés en vitesse avec les tapis (4) et (5) peuvent être ajoutés dans les zones d'appuis des genoux du pilote lors de l'inclinaison du véhicule.

6. Dispositif selon la revendication 1 **caractérisé en ce que** les mouvements du véhicule et leur amplitude peuvent être contraints séparément grâce à l'action des vérins (7) et (8).

7. Dispositif selon la revendication 1 **caractérisé en ce qu'**il comporte un plastron (11) porté par le conducteur du véhicule afin de restituer les sensations d'accélération et de freinage, ledit plastron (11) comprenant: 2 filins (12) partant de la face postérieure du plastron (11) pour rejoindre leur boitier de contrôle (14) et 2 filins (13) partant de la face antérieure du plastron, passant par la colonne de direction du véhicule et revenant vers l'arrière du véhicule dans le boitier de contrôle (14).

8. Dispositif selon la revendication 1 **caractérisé en ce qu'**il comporte des moyens de simulation de vent latéral, frontal et arrière (15) afin de restituer au plus près les conditions extérieures de conduite.

9. Dispositif selon l'une quelconque des revendications précédentes **caractérisé en ce qu'**il comporte des éléments de sécurité à déclenchement automatique ou manuel permettant de stopper tous les mouvements du véhicule et du dispositif mais aussi de sauvegarder le conducteur.

10. Dispositif selon la revendication 1 **caractérisé en ce qu'**il comporte des moyens de visualisation de parcours routiers ou tout-terrains (10) dont la taille et la répartition permet de stimuler tout le champ de vision du conducteur et sur lequel la représentation du parcours est asservie en temps réel à la trajectoire du véhicule quel que soit le paramétrage choisi pour la simulation et le mode de visualisation.

## Patentansprüche

1. Vorrichtung von simulieren der piloterung eines zweirädrigen fahrzeugs, zurückgeben die wahr fahrgefühle. Der besagte vorrichtung verwendet ein reales fahrzeug, das auf zwei laufband (4) und (5) betrieben wird, von denen einer für das vorderrad und der andere für das hinterrad, der besagte vorrichtung **dadurch gekennzeichnet, dass** der hintere laufband von dem hinterrad des fahrzeugs angetrieben wird und das vorderrad des fahrzeugs mit der gleichen drehzahl angetrieben wird von dem vorderen laufband, letztere wird auch kontrolliert durch die richtung der fahrzeuggabel, um in kurven den gyroskopischen effekt durch die rotierenden massen des fahrzeugs (räder und kurbelwelle) zu erhalten; und dass die verschiedenen arten von verwendbaren fahrzeugen durch eine anpassbare starre halterung (3a), die am fahrzeugchassis befestigt ist, der besagte anpassbare starre halterung (3a) einen hubzylinder (8) umfasst, der die freiheitsgrade bereitstellt, um erlauben die seitlichen neigungen erforderlich sind, und zwei hubzylinder (7), die ein außergewöhnliches seitliches gleitverhalten des fahrzeugs simulieren, wenn die vorderoder hinterräder den haftung verlieren.

2. Vorrichtung nach anspruch 1, **dadurch gekennzeichnet, dass** der laufband (4) vom hinterrad des fahrzeugs gemäß den simulierten griffbedingungen angetrieben wird, wobei das vorderrad des fahrzeugs mit der gleichen drehzahl angetrieben wirdvom laufband (5) respektieren der orientierungsfreiheit der vordergabel in einem geschwindigkeitsbereich, der mit den kapazitäten aktueller straßen und sportfahrzeuge kompatibel ist.

3. Vorrichtung nach anspruch 1 oder anspruch 2, **dadurch gekennzeichnet, dass** der abstand zwischen dem hinteren laufband (4) und dem vorderen laufband (5) einstellbar ist, um mit dem radstand der verschiedenen typen von zweiradfahrzeugen kompatibel zu sein.

4. Vorrichtung nach einem der vorherige ansprüche, **dadurch gekennzeichnet, dass** die laufband (4) und (5) es ermöglichen, den vertikalen druck, den jedes rad während die rollen auf die laufband ausübt, in echtzeit zu messen.

5. Vorrichtung nach anspruch 1 und anspruch 2, **dadurch gekennzeichnet, dass** 2 seitenlaufbänd (25) und (26), die mit der geschwindigkeit mit den laufbänd (4) und (5) synchronisiert sind, in die kniesupportbereich des piloten beim neigung den fahrzeugs hinzugefügt werden können.

6. Vorrichtung nach anspruch 1, **dadurch gekennzeichnet, dass** die bewegungen des fahrzeugs und ihre amplitude durch die wirkung der hubzylinder (7) und (8) separat begrenzt werden können.

7. Vorrichtung nach anspruch 1, **dadurch gekennzeichnet, dass** sie ein vom fahrer des fahrzeugs getragenes plastron (11) beinhaltet, um die beschleunigungs und bremsempfindungen wiederherzustellen, der besagte plastron (11) umfasst: 2 drähte (12), die von der rückseite des plastrons (11) ausgehen, um ihr steuerkasten (14) zu erreichen sie, und 2 drähte (13), die von der vorderseite des plastrons ausgehen, rund ausgehen die lenksäule des fahrzeugs verlaufen und zum heck des fahrzeugs in dem steuerkasten (14) zurückkehren.

8. Vorrichtung nach anspruch 1, **dadurch gekennzeichnet, dass** sie seiten, front und heckwindsimulationsmittel (15) beinhaltet, um die äußeren fahrbedingungen so genau wie möglich zu reproduzieren.

9. Vorrichtung nach einem der vorstehenden ansprüche, **dadurch gekennzeichnet, dass** sie sicherheitselemente mit automatischer oder manueller aktivierung beinhaltet, um alle bewegungen des fahrzeugs und der vorrichtung zu stoppen, aber auch um den fahrer zu schützen.

10. Vorrichtung nach anspruch 1, **dadurch gekennzeichnet, dass** sie mittel zum anzeigen von straßen oder geländerouten (10) beinhaltet, deren größe und verteilung es ermöglicht, das gesamte sichtfeld des fahrers zu stimulieren und auf der die darstellung der route in echtzeit auf die trajektorie des fahrzeugs gesteuert wird, unabhängig von der für die simulation und den anzeigemodus gewählten konfiguration.

## Claims

1. Simulation device of driving a vehicle with two wheels restoring the true sensations of driving. The device using a real vehicle operating on two separate treadmills (4) and (5), one for the front wheel and one for the rear wheel, the device being **characterized in that** the rear treadmill is driven by the rear wheel of the vehicle and the front wheel of the vehicle is driven at the same speed of rotation by the front treadmill, this last one being driven as well by the turn of the vehicle hand bar in order to get in the corners, the gyroscopic effect of the rotating masses of the vehicle (wheel and crankshaft); and in what the different types of vehicle that can be used are held in position on the device by a rigid adaptable support (3A) attached to the chassis of the vehicle, said adaptable rigid support (3A) including a Jack (8) giving the degrees of freedom needed for the return of side tilting and two jacks (7) simulating exceptional behaviors of lateral sliding of the vehicle during the loss of grip of the front or rear wheels.

2. Device according to claim 1, **characterized in that** the rear treadmill (4) is driven by the rear wheel of the vehicle in respect of the conditions of simulated adhesion, the front wheel of the vehicle being driven at the same speed of rotation by the front treadmill (5) respecting freedom of orientation of the hand bar in a speed range compatible with the capacity of road and sports vehicles of today.

3. Device according to claim 1 or claim 2 **characterized in that** the distance between the rear treadmill (4) and the front treadmill (5) is adjustable in order to be compatible with the wheelbase of the different types of 2-wheeled vehicle.

4. Device according to any of the previous claims, **characterized in that** the treadmills (4) and (5) allow to measure in real time the vertical pressure exerted by each wheel on the treadmills during taxiing.

5. Device according to claim 1 and claim 2 **characterized in that** 2 side treadmills (25) and (26) synchronized in speed with treadmills (4) and (5) can be added in the areas of support of the pilot's lap while in inclination of the vehicle.

6. Device according to claim 1, **characterized in that** the movements of the vehicle and their amplitude can be constrained separately through the action of the Jacks (7) and (8).

7. Device according to claim 1, **characterized in that** it comprises a plastron (11) carried by the driver of the vehicle in order to restore the feeling of acceleration and braking, said plastron (11) including: 2 links (12) from the rear of the plastron (11) to join their control unit (14) and 2 links (13) starting from the front of the plastron, through the steering column of the vehicle and heading back to the rear of the vehicle in the control unit (14).

8. Device according to claim 1, **characterized in that** it comprises means of simulation of wind lateral, front and rear (15) in order to return to the nearest external driving conditions.

9. Device according to any of the preceding claims **characterized in that** it has safety elements of automatic or manual trigger to stop all movements of the vehicle and the device but also to save the driver.

10. Device according to claim 1 **characterized in that** it comprises means of visualization of road or off-road course (10) whose size and distribution helps stimulate the entire field of vision of the driver and that the representation of the course is tied in real-time to the trajectory of the vehicle regardless of the setting chosen for the simulation and the viewing mode.
